# EUROPEAN PATENT SPECIFICATION

(11) **EP 2 909 904 B1**
(45) Date of publication and mention of the grant of the patent: **27.07.2016**
(21) Application number: 13780391.2
(22) Date of filing: 18.10.2013
(51) Int. Cl.: H02G 3/04

(54) **CABLE TIE AND RETENTION SYSTEM**
KABELHALTE- UND KABELBINDEVORRICHTUNG
DISPOSITIF DE RETENUE ET D`ATTACHE DE CÂBLE

(30) Priority: 18.10.2012 GB 201218727
(43) Date of publication of application: 26.08.2015
(73) Proprietor: Tyco Electronics UK Ltd., Swindon, Wiltshire SN3 5HH (GB)
(72) Inventor: REED, Martyn, Trowbridge Wiltshire BA14 7AG (GB); MacNAUGHTON, Roy, Swindon Wiltshire SN1 4LT (GB)
(74) Representative: Bankes, Stephen Charles Digby
(86) International application number: PCT/GB2013/052727
(87) International publication number: WO 2014/060773

(56) References cited:
- EP-A1- 0 555 187
- WO-A1-91/00973
- WO-A2-2008/028607
- FR-A5- 2 173 452
- US-A- 3 701 302
- US-A1- 2003 080 259
- US-A1- 2007 231 099
- US-A1- 2009 189 026

## Description

This invention relates to a cable tie system for retaining cable bundles in raceways.

In many fields of engineering, notably aircraft manufacture, bundles of cables such as electric wires or fibre optic cables run in raceways, which comprise open channels, typically of extruded aluminium. The bundles are retained in the channels at intervals by retainers locked into the channels. Often a raceway section comprises several parallel channels in their single extrusion, and it is important to ensure that the wires or cables are securely retained in their respective channels, do not become entangled with one another and that they break out from their respective channels at the desired positions.

One conventional type of cable tie, known as a harpoon tie, comprises an elongate retainer, usually of plastics material, having at one end a small flat base, beyond which a "harpoon" retention hook projects, comprising a resilient arrowhead which can be pushed through an aperture at the bottom of the channel, the arrowhead having resilient barbs that engage the underside of the channel to hold the retainer in place with the flat base on the channel floor. The tie is positioned centrally within the channel, projecting upwards from the channel floor, and a wire harness is laid in the channel, the wires being separated 50:50 on each side of the tie and a retainer secured to the tie, typically by a latching arrangement. This can be time-consuming as the ties are positioned about every 150 mm along the channel. It would be preferable to have a system that enabled wiring to be simply dropped in the channel as it is removed from its packaging, without the need to split it on either side of each tie, thereby saving time and reducing the risk of damage.

There is also a need for an improved way of removing cable retainers from the harpoon ties and removing the ties themselves from their attachment to the raceway floor. The latter currently involves pressing inwardly the barbs on each harpoon tie to allow it, along with the fair lead and cable retainer to be pulled out of the raceway in one operation. The tool conventionally used for this purpose has a recess to engage the harpoon tie on the underside of the raceway and, spaced from the recess, a fulcrum to engage part of the structure in which the raceway is mounted, the tool being rocked on the fulcrum to place the recess into engagement with the harpoon tie and compress the barbs inwardly as the tie is pulled out of the raceway from above. This involves great care to avoid damaging the wires retained by the tie.

US 2009/189026 discloses a cable support system comprising a base and two aligned, projecting elongated members, wherein a single elongated member comprises an outwardly facing ratchet surface designed to engage with matching teeth of a retainer positioned on the outer side of the elongated member. DE 102008041230 discloses a cable tie system comprising a pair of aligned cable ties attached to a base and a retainer for engaging with each cable tie. Similar to US 2009/189026, the cable ties of these systems have outwardly facing ratchet surfaces which engage with engaging members of the retainer positioned outside the planes of the parallel planes of the cable ties. FR2173452 discloses a cable tie system according to the preamble of claim 1.

US-A-4993669 discloses a cable or bundle tie arrangement comprising a plastic tie strap and a tie head. The tie head includes a housing having a pair of spaced apart slots forming a pair of strap-receiving passageways. Each passageway has an entrance opening and at least one of them has an exit opening. A pawl-receiving channel extends through the housing intermediate the passageway has at least one channel opening disposed substantially normal to the entrance openings where an intermediate portion of the channel intersects each of the passageways. A pawl member is mounted in the channel through the channel opening and includes a base portion and pair of arms extending from opposite sides of the base, each of these arms having a free end with a blade section to engage an inner surface of a strap passing through one of the passageways. The strap can thus be pulled tight around a wire bundle and lockingly maintain the tension around the article or bundle being tied.

The present invention provides a cable tie system comprising a tie member and a retainer, the tie member comprising a base having upper and lower sides, means being provided on the lower side for securing it within a cable raceway and the upper side having a pair of cable ties projecting upwardly therefrom at opposite edges of the base, and the retainer comprising a housing with a pair of passages dimensioned and positioned each to receive a respective one of said ties, each of said passages having a resilient engaging member to engage a tie passing through said passage and each of said resilient engaging members being connected to a release member which can be actuated to release the tie from the engagement member, characterised in that the cable ties lie in spaced apart parallel planes and are offset from one another in a direction parallel to said planes.

The means for securing the base within the raceway preferably comprises a projection designed to pass through an aperture in the raceway floor. The projection may for example be in the form of a resilient barbed projection to engage the underside of the raceway to retain the base in place.

In one preferred embodiment the means for securing the base within a cable channel comprises an aperture in the base, a laterally expandable member on the lower side of the base and a lock pin shaped and positioned, on insertion through said aperture, to expand said expandable member and engage therewith to retain the expandable member in its expanded configuration and thereby to engage the underside of the cable channel to retain the base in place, the lock pin being further shaped and configured so that upon rotation relative to the base and the expandable member it can be disengaged therefrom and withdrawn through said aperture to allow the expandable projection to assume its unexpanded configuration to allow removal of the tie member from the cable channel.

The expandable member may comprise a pair of resilient legs joined at their ends remote from the lower side of the base, the legs being integrally secured to the lower side of the base on opposite sides of said aperture.

The expanding member may for example comprise a screw or rivet.

In some embodiments the lock pin is secured to the base by at least one breakable web and positioned with a leading end thereof adjacent said aperture and in a rotational position such that it can be driven through said aperture breaking said web, to an inserted position in which it expands and engages said expandable member.

The lock pin may have at its end opposite said leading end, a head with a keyhole engageable by an insertion tool to enable rotation thereof about an axis parallel to its direction of insertion through said aperture.

The base is preferably flat and square or rectangular in shape so as to fit neatly on a flat floor of a cable raceway and preferably has substantially the same width as the raceway channel so as to prevent rotation of the base. The cable ties are preferably flexible strips projecting upwardly from opposite sides of the rectangular base. The cables ties are offset from one another in a direction parallel to the wire bundle to prevent bundle "pinching" and to facilitate removal of the retainer. This offset also prevents the cable ties in one channel interfering with the ties in an adjacent channel when the receiving apertures for the tie members are arranged in a line across the width of the raceway,

The cable ties preferably have ratchet surfaces on inwardly facing sides to engage the respective engaging members in the cable retainer.

The cable retainer may have a pair of levers, each attached to one of the resilient retaining members, the levers being aligned so that they can be pinched towards one another, simultaneously disengaging both resilient retaining members from the retaining elements of the cable tie.

In another embodiment the retaining members are connected to one another by a resilient bridge, twisting of which pulls both retaining members out of engagement with the ratchet surfaces of the respective cable tie members. In this embodiment, the resilient bridge is preferably supported at a central position by a post connecting the bridge to the container housing while allowing limited twisting of the bridge relative to the housing. This reduces the risk of vibration in use causing the retaining members to disengage from the cable ties.

The slots in the retainer for the cable ties preferably have interrupted outer sides for lateral insertion of the cable ties. In some embodiments the cable ties are formed with outwardly turned hooks at their upper end, to engage respective opposite upper edges of the raceway in which the ties are inserted. This would prevent the upper ends of the ties simply being pushed through the slots in the retainer. Instead, the hooks maybe connected to the upper ends of the ties by relatively narrow neck sections which can fit through a slit between portions of the outer wall of a retainer slot to allow the cable tie then to be pushed through the slots.

The cable tie system of the invention preferably includes a fair lead which in the assembled system lies between the retainer housing and the base of the cable tie member and has at least one channel therethrough to allow insertion of additional wires in the channel without disturbing cables already retained therein. The fairlead maybe formed integrally on the underside of the retainer housing. In some embodiments the fairlead is integrally connected to the retainer housing, to assist molding of the fairlead and retainer housing together. The fairlead can then be snapped into position on the underside of the housing for insertion into a cable raceway.

Preferred embodiments of the invention will now be described with reference to the accompanying drawings wherein:
**Figure 1** is a perspective view of a cable tie system according to the present invention, including a cable tie member and a cable retainer;
**Figure 2** is a side elevation of the cable retainer and tie member of the system of Figure 1;
**Figure 3** is a top plan view of the cable retainer of Figure 1 with the cable tie strips engaged;
**Figure 4** is a cross-sectional view on the line IV to IV in Figure 3;
**Figure 5** is a cross-sectional view of a cable raceway having three channels each fitted with a retaining system similar to that of Figures 1 to 4;
**Figure 6** is a perspective view of a cable breakout assembly using the retaining system in accordance with another embodiment of the invention;
**Figure 7** is an exploded view of the assembly of Figure 6; and
**Figures 8 and 9** illustrate the use of a tool to release the cable retainers of the invention;
**Figure 10** is a perspective view of a further embodiment of a tie member in accordance with the invention, combined with a further embodiment of the retainer and fairlead;
**Figure 11** is a partial cross-sectional view on the line XI to XI in Figure 10;
**Figure 12** is a partial cross-sectional view of the line XII to XII in Figure 2;
**Figure 13** is a top plan view of the tie member of Figure 10, with the locking pin removed;
**Figure 14** is a side elevation of the retainer of Figure 10, with the fairlead in its open (as moulded) position;
**Figure 15** is a top plan view of the retainer as shown in Figure 14;
**Figure 16** is a partial cross-section on the line XVI to XVI of Figure 14;
**Figure 17** is a cross-sectional view similar to that of Figure 11, showing a modified version of the split sleeve;
**Figure 18** is a cross sectional view similar to that of Figure 12, showing the modified split sleeve of Figure 11;
**Figure 19** is a schematic side elevation of a cable tie and retainer system of the present invention installed in a raceway, adjacent a cable breakout; and
**Figure 20** is a partial cross-sectional view on the line XVIII to XVIII of Figure 19.

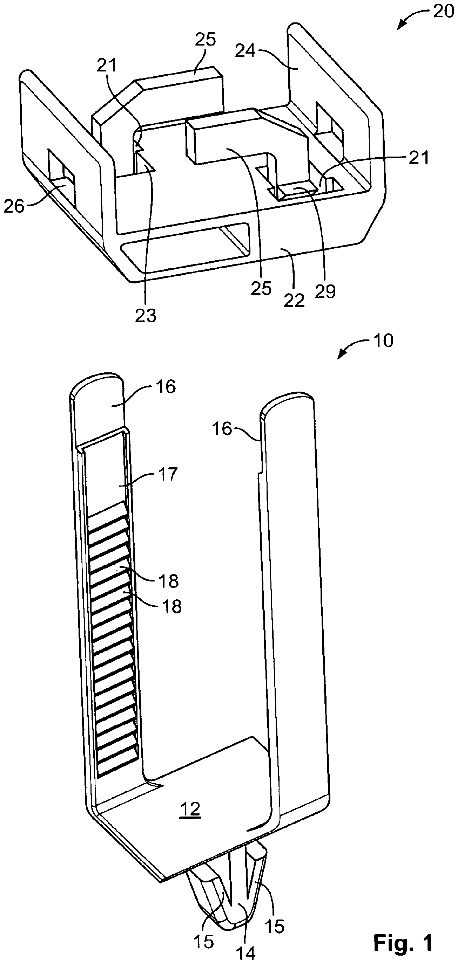

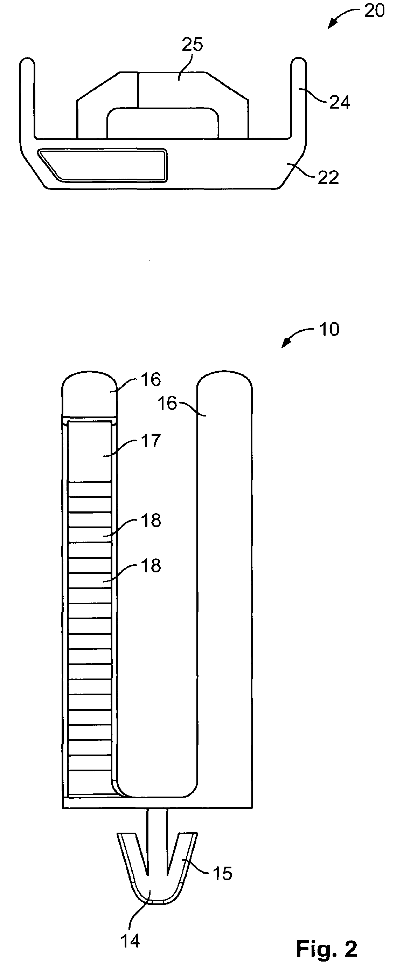

Referring first to Figures 1 and 2, these show respectively an enlarged perspective view and an enlarged side elevation of a cable tie system in accordance with the present invention. The system comprises a cable tie member generally indicated by 10 and a retaining member generally indicated by 20. Both components are made of a resilient plastics material, for example nylon, and are preferably integrally moulded. The cable tie member comprises a rectangular flat base 12, shaped and dimensioned to rest on the floor of a cable raceway. Projecting downwardly from a central position on the underside of the base 12 is a barbed locking member 14 comprising a central rectangular projection and a pair of resilient barbs 15 extending from its lower end. To secure the tie member in position, the locking member 14 is pushed through an aperture in the floor of a raceway, the barbs 15 being compressed towards the central member as the locking member is pushed through the slot, and then resiliently expanding outwards again to lock the tie member onto the raceway floor.

Projecting upwardly from opposite edges of the base 12, and offset relative to one another to adjoin opposite ends of the base, are two flexible cable tie strips 16. These are shaped and positioned to lie against opposite walls of a cable raceway and each have an inwardly facing surface 17 formed with a ratchet strip 18 having a plurality of ratchet teeth 18.

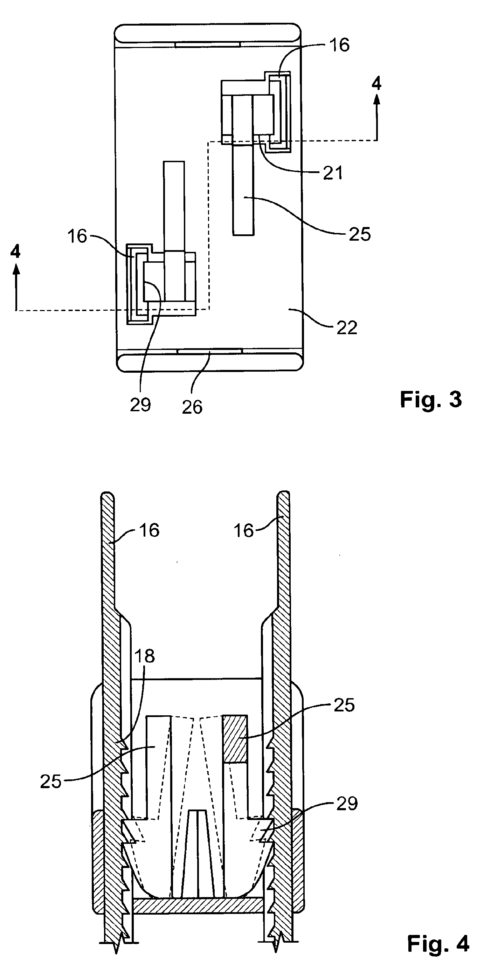

The cable retainer 20 comprises a housing 22 with vertical passages in the form of slots 21 extending from top to bottom, to receive respective tie strips 16. To retain the tie strips 16, integrally formed resilient engaging members 25 are provided, each formed as a lever with engaging teeth 29 extending into slots 21 to engage the ratchet 18 of one of the tie strips. The engaging members extend upwardly from the floor of the retainer, being formed integrally with it and moveable resiliently in a rocking motion as can best be seen in Figure 4.

Figures 3 and 4 show respectively in plan view and in cross section how the tie strips 16 extend through slots 21, their respective ratchet surfaces engaging the teeth 29 of the retainer extending members. In Figure 4 teeth 29 of engaging members 25 are shown as engaging the ratchet teeth of the tie strips and also show, in broken lines, how the two engaging members 25 can be pinched together to disengage their teeth from the tie strips to allow the retainer to be disengaged from the cable tie element.

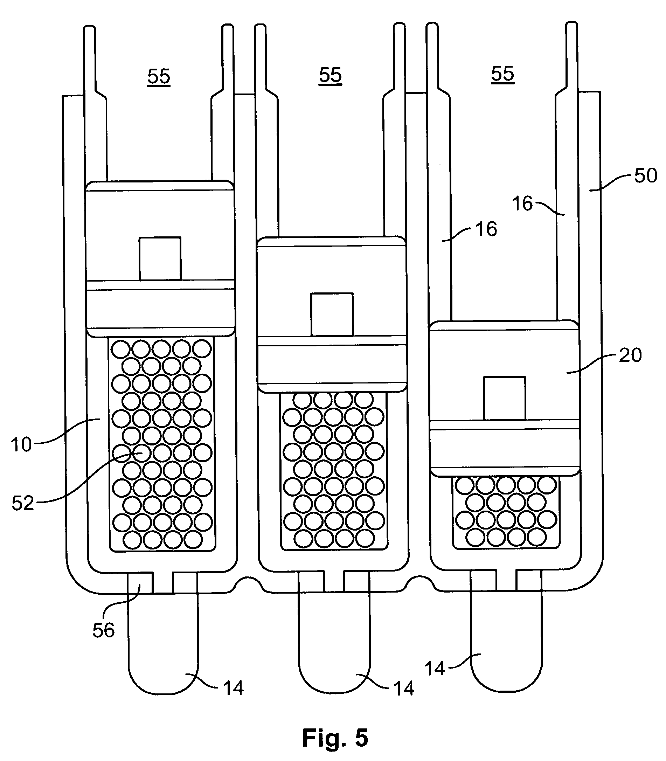

Figure 5 shows in cross-section a three-channel raceway 50 having channels 55 each containing a wire bundle 52 enclosed between a retainer strip 16 of the assembly of Figures 1 to 4 and retained by a retaining member 20 of that assembly. The ratchet surfaces on the tie strips 16 enable the retainers 20 to be pushed down to an appropriate height for the size of the wire bundle, so as to retain the bundle against substantial movement. This view also shows the barbed locking members 14 projecting through apertures 56 in the raceway floor, barbs 15 engaging the underside of the raceway to hold the cable ties 10 in place.

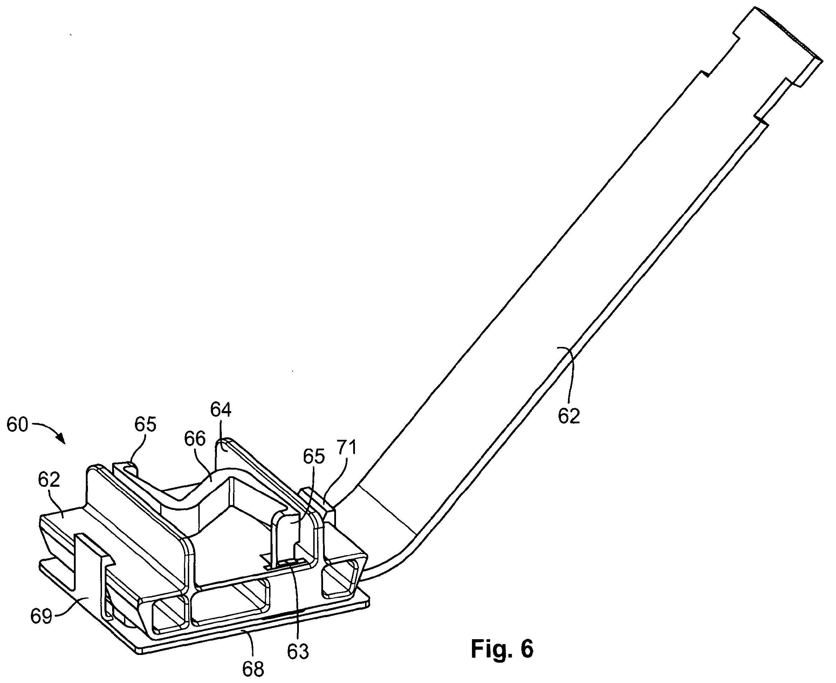

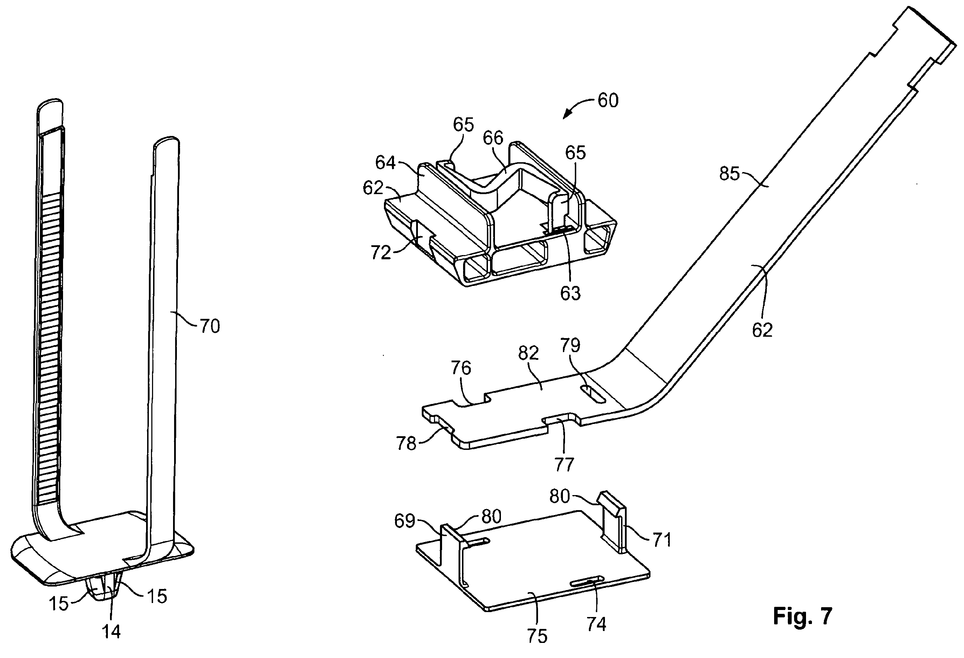

Figure 6 and 7 illustrate another embodiment of the invention, which includes a cable breakout 62 to support a wire harness leaving a channel of a cable raceway. The assembly comprises a cable tie member 70 similar to that of the embodiment of Figures 1 to 5 and a retainer generally indicated by 60, which engages the tie strips of the cable retainer in essentially the same way as in the previous embodiment. The retainer 60 comprises a retainer body 62 through which extends a pair of slots 63 through which can pass the tie strips of the tie member 70. Within the housing, the tie strips are engageable by resilient engaging members 65 which, within the housing, are shaped and mounted in the same way as the members 25 of the first embodiment. These engaging members are however connected to one another by an integrally formed resilient bridge member 66 having a Z shape, twisting of which in an anti-clockwise direction as shown in Figures 6 and 7, draws both levers 65 towards the centre of the housing and away from the ratchet surfaces of tie strips extending through the slots, so as to disengage the retaining member from the tie strips and allow its removal. As the retaining member is likely to be quite small, the bridge member 66 can be gripped with pliers for this purpose. Because the retaining member has a width similar to that of the channel in which it is mounted, it will be held against rotating itself when the bridge member 66 is gripped and twisted.

Figure 6 shows a breakout support 62 secured under the cable retainer 60 by a break-out clip-on retention plate 68. When the breakout support is used, it is the retention plate 68 that bears on the wire bundle in the channel.

As can be seen in Figure 7, the clip-on retention plate 75 is a flat rectangular member having slots 74 to align with the slots 63 of the retaining member 62 and the tie strips of the tie member 70. Integrally formed at opposite ends of the retention plate are engaging members 69, 71, having hook formations 80 at their upper ends to engage in corresponding recesses 72 of the retainer 62.

The breakout support 62 comprises an elongate strip with a flat base portion 82 from one end of which a guide strip 85 extends upwardly at an obtuse angle relative to the base. The base is formed with notches 76, 77 to align with the slot 74 of the retention plate and the slot 63 of the retainer, to allow passage of the cable tie strips. The base 82 also has one end a notch 78 to accommodate retainer 69 and at the end adjacent the support strip 85 a slot 79 for passage of retainer 71.

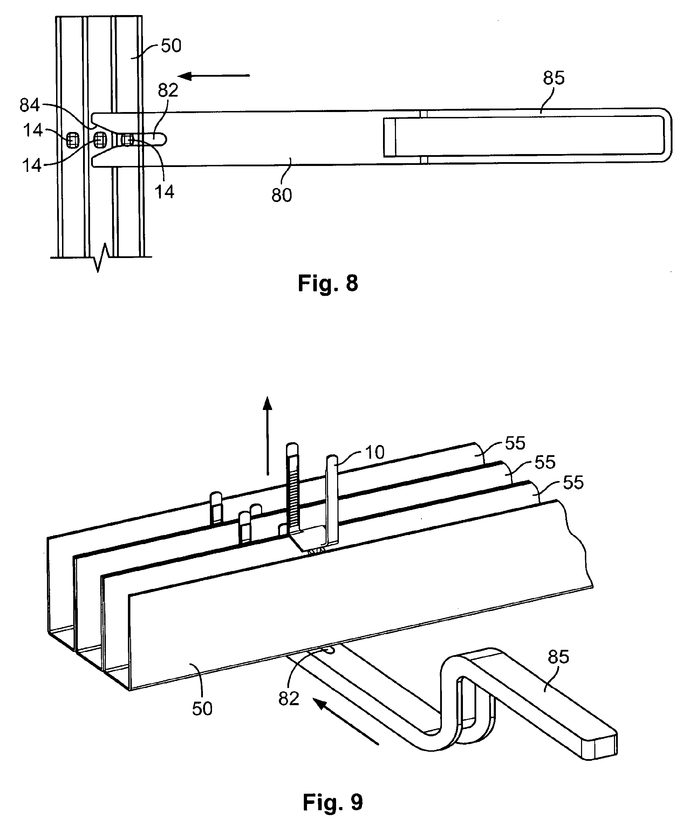

Figures 8 and 9 shows the use of a tool 80 to release a cable retainer 70 from a channel 55 of a raceway 50. The tool comprises a handle 85 at one end and, at its other end, an open-ended slot 82 with a pair of outwardly tapering surfaces 84 at its open end to engage the locking members 14 of cable retainers 70. The tool is placed with its upper surface against the under-side of the raceway 50, aligned with the locking members 14, and pushed at right angles so that the locking members are successively engaged in the slot 82. As each locking member passes through the tapered end of the slot to its narrowest portion, its barbs 15 are pushed inwardly towards the central member until they are close enough together to pass through the aperture 56 on the floor of the raceway. The tie member 10 can then be pulled out as shown in Figure 9.

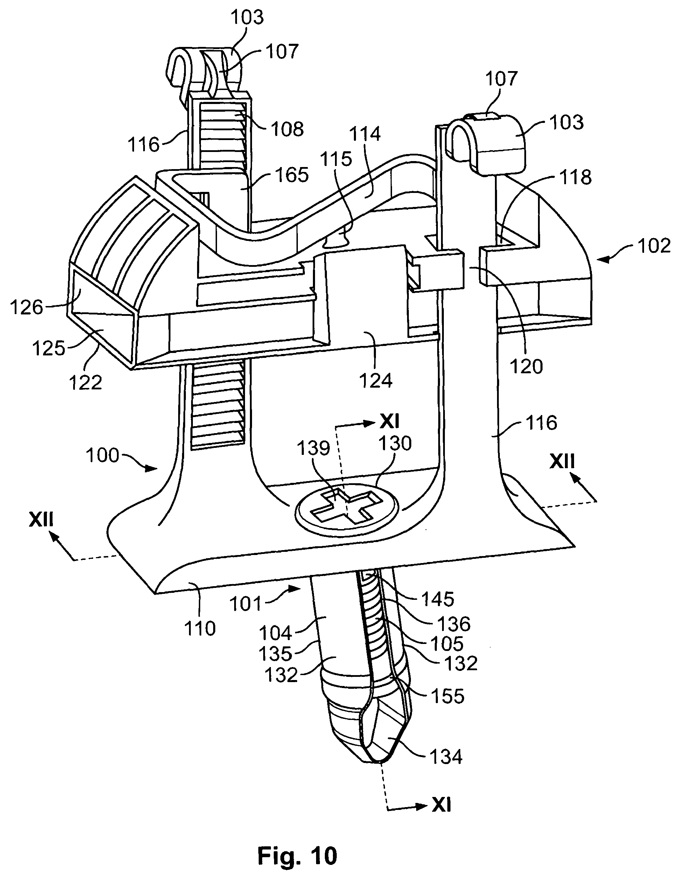

Referring now to Figure 10, a cable tie member generally indicated by 100 is similar in principle to that shown in Figure 1, but differs in two respects. First, at the upper ends of the ties 116 there are provided hooks 103, integral with the ties 116 and connected thereto by neck portions 107, to engage the opposed upper edges of a cable raceway. Secondly, the tie has a modified securing system 101 including a lock pin 105 fitting into a split sleeve 104.

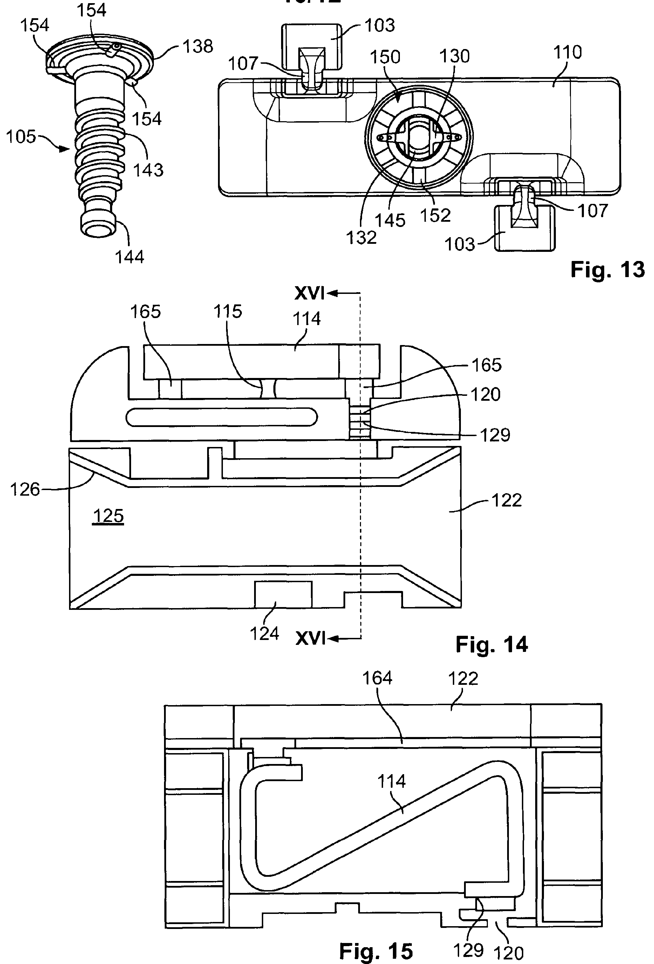

The retainer of Figure 10, which will be described in more detail below in relation to Figures 14 to 16, differs from that of Figures 6 and 7 in that the cable tie slots 118 have openings 120, to enable the cable ties, longitudinal insertion of which would be otherwise obstructed by the hooks 103, to be inserted by sliding the respective necks 107, through the openings 120. Secondly, the bridge 114 connecting the retaining hooks is connected to the retainer housing at its centre by a resilient post 115, to prevent vibration of the bridge 114 in use, which could result in disengagement of the hooks from the tie members, or even in breakage of the bridge.

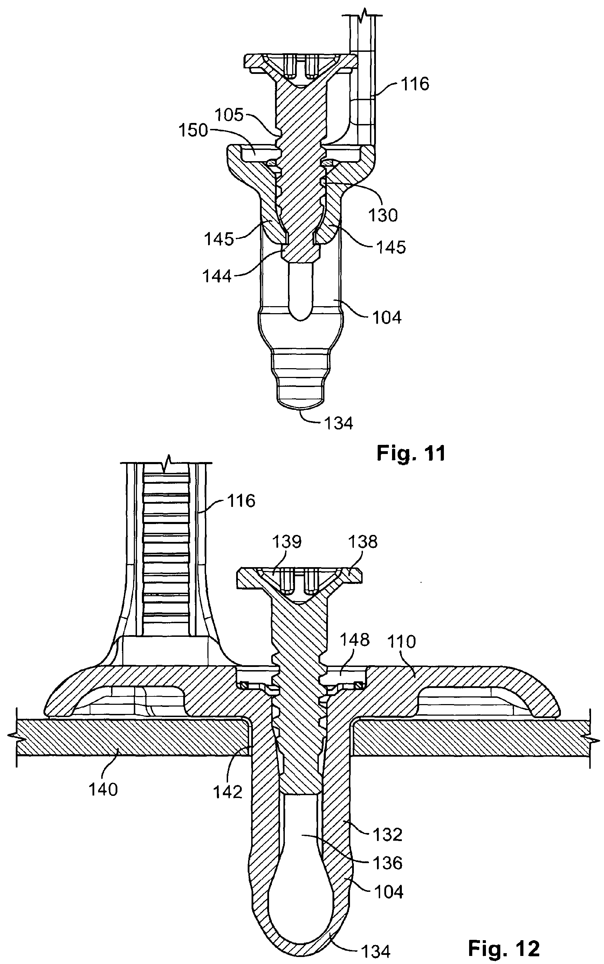

The securing system 101 will now be discussed in more detail, in conjunction with Figures 11 to 13. The base 110 of the tie member 100 has a central hole 130 therethrough for insertion of a lock pin 105, shown fully inserted in Figure 10, partially inserted in Figures 11 and 12 and separately in Figure 13. Extending downwardly from the base 110 is a split sleeve 104, shown in partial cross section in Figures 11 and 12. The sleeve may be formed integrally with the tie member base, or may be formed as an insert for simplicity of construction. The sleeve comprises two downwardly extending sections 132 each of part-circular cross-section, coaxial with the lock pin and connected together by the lower ends by an end section 134. The sections 132 are divided from one another by slots 136, on either side of a plane bisecting the tie member base 110 transversely.

The sections 132 are of resilient material so as to be pushed radially apart from one another on insertion of the lock pin.

The split sleeve is shaped and dimensioned to be inserted with a close fit through an aperture 142 in a raceway floor 140 (see Figure 12), so that insertion of the lock pin pushes the sections 132 radially apart to retain the sleeve in the aperture 142.

As best be seen Figures 11 to 13, the lock pin 105 has a widened head 138, a threaded shaft 143 and an enlarged leading end 144. The head is provided with a cross-shaped aperture 139 to receive the end of a correspondingly shaped screw driver for removal of the lock pin as will be described below.

As can best be seen in Figure 11, at the top of each of the wider slots 136 is a resilient pawl 145, extending downwardly from the base 110 and slightly inwardly so as to engage the lock pin when it is inserted. The pawls 145 are integral with the base 110, as can be seen in Figure 11. Just below the top surface of the base, is a widened section 148 of aperture 130, forming an annular shoulder 150 with six radially extending protrusions 152 spaced circumferentially around the shoulder.

To secure the cable tie in position, the tie is placed on the floor 140 of a raceway, with the split sleeve 101 extending through an aperture 142. In the tie as supplied, the lock pin 105 is partially inserted into the split sleeve and retained by a breakable web 160. Although the shaft 142 of the lock pin in threaded, the pin does not have to be screwed into place. Firm downward pressure can be used to push the pin into the position shown in Figure 10, pushing apart the pawls 145 which, when the lock pin reaches its fully inserted position, engage the threaded shaft to hold it in place. In this position, radial ridges 154 on the underside of the head 138 of the lock pin engage in respective radial recesses 152 and rotation of the lock pin around its axis is prevented by the interaction of ridges 154 on the lock pin and protrusions 152 on the base.

The cable tie member is thus held firmly in place on the floor of a raceway, and the hooks 103 can engage the upper edges of the raceway sides. Cables can then be laid along the upper surface of the tie member base 110, between the opposed cable ties 116, and the retainer 102 pushed down on top of the wires or cables to retain them in place.

To remove the cable tie member from the raceway, a cross-headed screw driver or similar tool is inserted into the recess 139 of the lock pin and rotated anticlockwise to withdraw the pin from the sleeve in the manner of an ordinary screw. When the widen end 144 of the lock pin reaches and abuts the lower ends of pawls 145, further axial withdrawal of the pin is resisted but in this position the sections 132 of the split sleeve are close enough radially to enable the sleeve to be withdrawn through aperture 142.

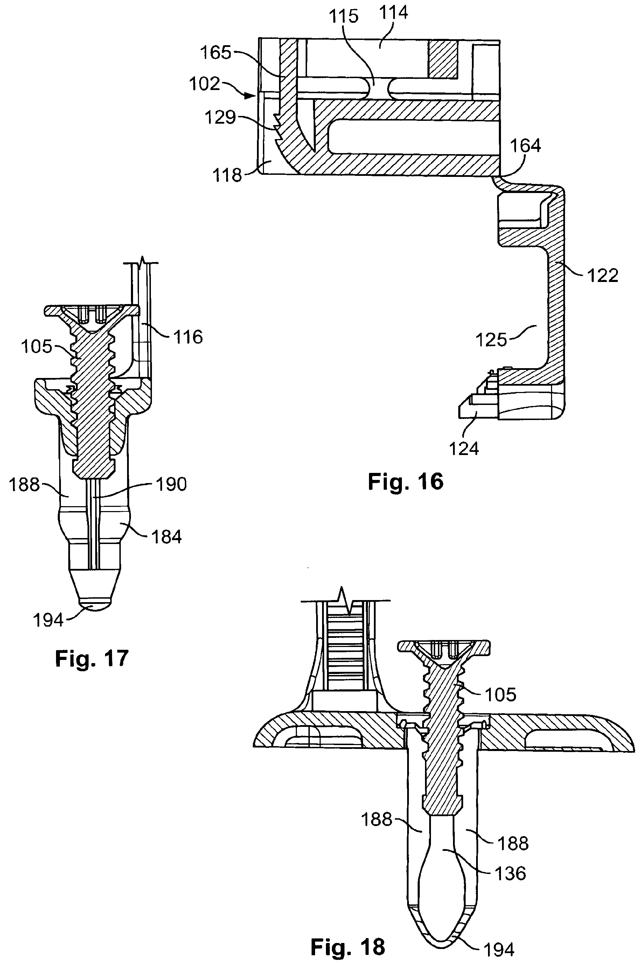

The retainer 102 also differs from previously described retainers in that it has a fairlead 122, integrally formed with it but connected to it by a hinge 164 (see Figure 16) along one edge thereof and retained in position by an integral hook 124 formed on the side of the fairlead opposite the hinge. The fairlead has a passage 125 extending through the whole of its length to allow the insertion of wires after installation of the cable tie system. Inwardly tapering sides 126 assist in guiding wires through the fairlead passage.

Referring now to Figures 14 to 16, the fairlead 122 is connected to the retainer 102 by an integral hinge 164 which enables the fairlead to assume the position shown in these figures, at right angles to the retainer. When assembling a cable tie, before the retainer and fairlead are threaded onto the ties 116, the fairlead is rotated through 90° clockwise as shown in Figure 16 so that the hook 124 engages an outer longitudinal edge of the retainer as shown in Figure 10.

As can best be seen in Figure 16, the retainer is provided with toothed engaging members 1 to 9 formed on levers 165 which are integrally connected to the retainer housing at their lower ends and to the bridge 114 at the upper ends. The engaging members 129, located in cable tie channels 118, are thus able to engage the teeth 108 of the cable ties and can be pulled out of engagement with those teeth by rotation of the bridge 114 about its central mounting post 115. This retainer thus works in essentially the same way as the retainer of Figures 6 and 7.

Figures 17 and 18 shows a modified split sleeve 184, similar to that of Figures 10 to 12 but with an additional pair of narrow slits 190 aligned on a plane parallel to the cable ties 116. These, together with the wider slots 136, divide the split pin into four quadrant sections 188, all of which are connected together at the lower end 194 of the split pin.

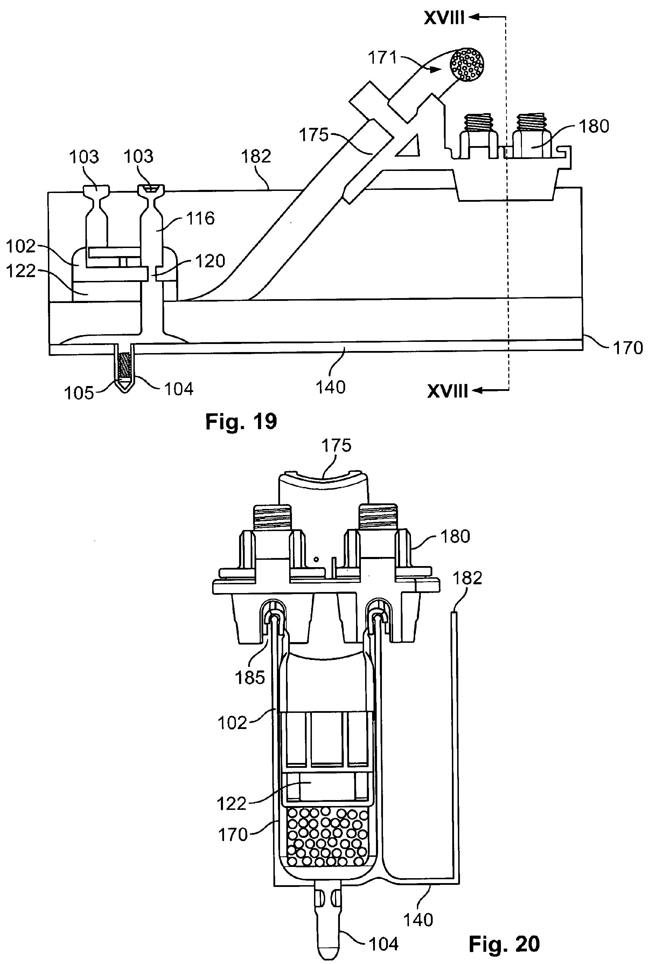

Referring finally to Figures 19 and 20, a cable or wire bundle 170 is made along the floor 140 of a raceway, passing between the ties 116 of a cable tie member according to the invention. The split sleeve 104 of the tie member projects through an aperture in the raceway floor and a lock pin 105 is pushed through to secure it in position. The hooks 103 engage over the upper edges 182 of the raceway, which are beaded as can be seen in Figure 20. The retainer 102 and fairlead122 are shown schematically in Figure 17. Figure 20 clearly shows the passage through the fair lead which can be used to thread additional wires after fitting of the retainer.

A cable breakout member 175 is mounted on a support body 180 which straddles the opposed edges 182 of the raceway to receive a breakout cable 171.

## Claims

1. A cable tie system comprising a tie member (10) and a retainer (20), the tie member comprising a base (12) having upper and lower sides, means (14,15) being provided on the lower side for securing it within a cable channel and the upper side having a pair of cable ties (16) projecting upwardly therefrom at opposite edges of the base (12), and the retainer comprising a housing (22) with a pair of passages (21) dimensioned and positioned each to receive a respective one of said ties, each of said passages having a resilient engaging member (25) to engage a tie passing through said passage and each of said resilient engaging members being connected to a release member which can be actuated to release the tie from the engagement member,
**characterised in that**:
the cable ties (16,116) lie in spaced apart parallel planes and are offset from one another in a direction parallel to said planes.

2. A cable tie system according to claim 1 wherein the means for securing the base within the cable channel comprises a resilient barbed projection (14,15) to engage the underside of the cable channel to retain the base in place.

3. A cable tie system according to claim 1 wherein the means for securing the base (110) within a cable channel comprises an aperture (130) in the base, a laterally expandable member (104) on the lower side of the base and a lock pin (105) shaped and positioned, on insertion through said aperture, to expand said expandable member and engage therewith to retain the expandable member in its expanded configuration and thereby to engage the underside of the cable channel to retain the base in place, the lock pin being further shaped and configured so that upon rotation relative to the base and the expandable member it can be disengaged therefrom and withdrawn through said aperture to allow the expandable projection to assume its unexpanded configuration to allow removable of the tie member from the cable channel.

4. A cable tie system according to claim 3 wherein said expandable member comprises two or more resilient sections (132) joined at their ends remote from the lower side of the base, the resilient sections being integrally secured to the lower side of the base around said aperture (130).

5. A cable tie system according to claim 3 or claim 4 wherein the locking pin (105) comprises a screw or rivet.

6. A cable tie system according to any one of claims 3 to 5 wherein the lock pin (105) is engaged with the base and positioned with a leading end thereof in or adjacent said aperture (130) and in a rotational position such that it can be driven through said aperture, to an inserted position in which it expands and engages said expandable member (104) optionally, wherein said lock pin (105) has, at its end opposite said leading end, a head (138) with a keyhole (139) engageable by an insertion tool to enable rotation thereof about an axis parallel to its direction of insertion through said aperture.

7. A cable tie system according to any preceding claim wherein the base (12,110) is square or rectangular in shape.

8. A cable tie system according to any preceding claim wherein the cable ties (16,116) have inwardly facing sides (17) with ratchet surfaces (18,108) to engage respective engaging members (25) in the cable retainer (20,102).

9. A cable tie system according to any preceding claim wherein the upwardly projecting ties (116) are provided with outwardly facing hooks (103) at their upper ends to engage respective opposite sides of a cable channel.

10. A cable tie system according to any preceding claim wherein the engaging members (25) comprise resilient projections (29, 129) each formed with one or more teeth extending into one of the pair of passages (21,118) to engage correspondingly toothed surface (18, 108) of a cable tie (16,116) extending through said passage, the resilient projection being moveable out of engagement with said tie.

11. A cable tie system according to any preceding claim wherein the release member is a lever and the pair of levers are aligned so that they can be pinched towards one another, simultaneously disengaging both resilient engaging members from the retaining elements of the cable tie (16).

12. A cable tie system according to any one of claims 1 to 10 wherein the resilient engaging members (65,165) are connected to one another by a resilient bridge (66,114), twisting of which pulls both engaging members out of engagement with the cable ties (70,116) optionally, wherein the resilient bridge (114) is supported at their central position thereof by a post (115) connecting the bridge to the retainer housing while allowing limited twisting of the bridge relative to said housing.

13. A cable tie system according to any preceding claim wherein the slots in the retainer for the cable ties (116) have interrupted outer sides (120) to facilitate insertion of the cable ties.

14. A cable tie system according to any preceding claim further comprising a fairlead (122) which in the assembled system lies between the retainer housing and the base (110) of the cable tie member (100) and has at least one channel therethrough to allow insertion of additional wires in the channel without disturbing cables already retained therein.

15. A cable tie system according to claim 14 wherein the fairlead is formed integrally on the underside of the retainer housing optionally, wherein the fairlead (122) is hingedly connected to the retainer housing.

## Patentansprüche

1. Kabelbindersystem, das ein Binderelement (10) und eine Halterung (20) umfasst, wobei das Binderelement eine Basis (12) mit einer oberen und einer unteren Seite umfasst, wobei an der unteren Seite Mittel (14, 15) vorgesehen sind, um es in einem Kabelkanal zu befestigen, und wobei die obere Seite ein Paar Kabelbinder (16) aufweist, die an gegenüberliegenden Rändern der Basis (12) davon nach oben vorstehen, und die Halterung ein Gehäuse (22) mit einem Paar Durchgängen (21) umfasst, die so dimensioniert und positioniert sind, dass sie jeweils einen der genannten Binder aufnehmen, wobei jeder der genannten Durchgänge ein elastisches Eingriffselement (25) zum Eingreifen in einen durch den genannten Durchgang gehenden Binder umfasst und wobei jedes der genannten elastischen Eingriffselemente mit einem Löseelement verbunden ist, das betätigt werden kann, um den Binder von dem Eingriffselement zu lösen,
**dadurch gekennzeichnet, dass**:
die Kabelbinder (16, 116) in beabstandeten parallelen Ebenen liegen und in einer Richtung parallel zu den genannten Ebenen voneinander versetzt sind.

2. Kabelbindersystem nach Anspruch 1, wobei das Mittel zum Befestigen der Basis im Kabelkanal einen elastischen, mit Widerhaken versehenen Vorsprung (14, 15) zum Eingreifen in die untere Seite des Kabelkanals umfasst, um die Basis festzuhalten.

3. Kabelbindersystem nach Anspruch 1, wobei das Mittel zum Befestigen der Basis (110) in einem Kabelkanal ein Loch (130) in der Basis, ein lateral ausdehnbares Element (104) an der unteren Seite der Basis und einen Sperrstift (105) umfasst, der beim Einführen durch das genannte Loch so geformt und positioniert ist, dass er das genannte ausdehnbare Element ausdehnt und darin eingreift, um das ausdehnbare Element in seiner ausgedehnten Konfiguration festzuhalten und dadurch in die untere Seite des Kabelkanals einzugreifen, um die Basis festzuhalten, wobei der Sperrstift ferner so geformt und konfiguriert ist, dass er beim Drehen relativ zur Basis und dem ausdehnbaren Element davon gelöst und durch das genannte Loch entfernt werden kann, um es zuzulassen, dass der ausdehnbare Vorsprung seine unausgedehnte Konfiguration einnimmt, um ein Entfernen des Binderelements vom Kabelkanal zuzulassen.

4. Kabelbindersystem nach Anspruch 3, wobei das genannte ausdehnbare Element zwei oder mehr elastische Abschnitte (132) hat, die an ihren Enden fern von der unteren Seite der Basis zusammengefügt sind, wobei die elastischen Abschnitte einstückig an der unteren Seite der Basis um das genannte Loch (130) herum befestigt sind.

5. Kabelbindersystem nach Anspruch 3 oder Anspruch 4, wobei der Sperrstift (105) eine Schraube oder einen Niet umfasst.

6. Kabelbindersystem nach einem der Ansprüche 3 bis 5, wobei der Sperrstift (105) mit der Basis im Eingriff und mit einem vorderen Ende davon in oder neben dem genannten Loch (130) und in einer Drehposition so positioniert ist, dass er durch das genannte Loch in eine Einsetzposition getrieben werden kann, in der er sich ausdehnt und optional in das genannte ausdehnbare Element (104) eingreift, wobei der genannte Sperrstift (105) an seinem Ende gegenüber dem genannten vorderen Ende einen Kopf (138) mit einem Schlüsselloch (139) hat, in das ein Einsatzwerkzeug eingesteckt werden kann, um seine Rotation um eine Achse parallel zu seiner Einsetzrichtung durch das genannte Loch zu ermöglichen.

7. Kabelbindersystem nach einem vorherigen Anspruch, wobei die Basis (12, 110) quadratisch oder rechteckig geformt ist.

8. Kabelbindersystem nach einem vorherigen Anspruch, wobei die Kabelbinder (16, 116) einwärts gewandte Seiten (17) mit Rastflächen (18, 108) zum Eingreifen in jeweilige Eingriffselemente (25) in der Kabelhalterung (20, 102) haben.

9. Kabelbindersystem nach einem vorherigen Anspruch, wobei die nach oben vorstehenden Binder (116) mit auswärts gewandten Haken (103) an ihren oberen Enden versehen sind, um in jeweilige gegenüberliegende Seiten eines Kabelkanals einzugreifen.

10. Kabelbindersystem nach einem vorherigen Anspruch, wobei die Eingriffselemente (25) elastische Vorsprünge (29, 129) haben, jeweils mit einem oder mehreren Zähnen ausgebildet sind, die sich in einen aus dem Paar Durchgänge (21, 118) erstrecken, um in eine entsprechend gezahnte Fläche (18, 108) eines Kabelbinders (16, 116) einzugreifen, der durch den genannten Durchgang verläuft, wobei der elastische Vorsprung aus dem Eingriff mit dem genannten Binder bewegt werden kann.

11. Kabelbindersystem nach einem vorherigen Anspruch, wobei das Löseelement ein Hebel ist und die Hebel des Paares so ausgerichtet sind, dass sie zusammengedrückt werden können, um beide elastische Eingriffselemente gleichzeitig von den Halteelementen des Kabelbinders (16) zu lösen.

12. Kabelbindersystem nach einem der Ansprüche 1 bis 10, wobei die elastischen Eingriffselemente (65, 165) durch eine elastische Brücke (66, 114) miteinander verbunden sind, deren Verdrehen beide Eingriffselemente optional aus dem Eingriff mit den Kabelbindern (70, 116) zieht, wobei die elastische Brücke (114) in ihrer mittleren Position von einem Pfosten (115) getragen wird, der die Brücke mit dem Halterungsgehäuse verbindet und dabei ein begrenztes Verdrehen der Brücke relativ zu dem genannten Gehäuse zulässt.

13. Kabelbindersystem nach einem vorherigen Anspruch, wobei die Schlitze in der Halterung für die Kabelbinder (116) unterbrochene Außenseiten (120) aufweisen, um ein Einführen der Kabelbinder zu erleichtern.

14. Kabelbindersystem nach einem vorherigen Anspruch, das ferner eine Klüse (122) umfasst, die in dem zusammengefügten System zwischen dem Halterungsgehäuse und der Basis (110) des Kabelbinderelements (100) liegt und durch die wenigstens ein Kanal verläuft, um das Einführen zusätzlicher Drähte in den Kanal zuzulassen, ohne bereits darin gehaltene Kabel zu stören.

15. Kabelbindersystem nach Anspruch 14, wobei die Klüse optional einstückig an der Unterseite des Halterungsgehäuses ausgebildet ist, wobei die Klüse (122) mit dem Halterungsgehäuse gelenkig verbunden ist.

## Revendications

1. Système d'attache de câble comprenant un élément d'attache (10) et un dispositif de retenue (20), l'élément d'attache comprenant une base (12) avec des côtés inférieur et supérieur, des moyens (14, 15) étant prévus sur le côté inférieur pour l'assujettir au sein d'un chemin de câbles et le côté supérieur possédant une paire d'attaches de câble (16) lesquelles font saillie vers le haut à partir de celui-ci au niveau de bords opposés de la base (12), et le dispositif de retenue comprenant un logement (22) avec une paire de passages (21) dont chacun est dimensionné et positionné pour recevoir une attache respective desdites attaches, chacun desdits passages possédant un élément d'emboîtement élastique (25) pour s'emboîter avec une attache passant à travers ledit passage et chacun desdits éléments d'emboîtement élastiques étant raccordé à un élément de libération qui peut être actionné pour libérer l'attache de l'élément d'emboîtement,
**caractérisé en ce que** :
les attaches de câble (16, 116) se trouvent dans des plans parallèles espacés l'un de l'autre et sont décalées l'une par rapport à l'autre suivant un sens qui est parallèle auxdits plans.

2. Système d'attache de câble selon la revendication 1, les moyens pour assujettir la base au sein du chemin de câbles comprenant une saillie à barbes élastiques (14, 15) afin de se solidariser avec la face inférieure du chemin de câbles pour retenir la base en place.

3. Système d'attache de câble selon la revendication 1, les moyens pour assujettir la base (110) au sein d'un chemin de câbles comprenant une ouverture (130) ménagée dans la base, un élément expansible latéralement (104) sur le côté inférieur de la base et une broche de verrouillage (105) façonnée et positionnée, lors de l'insertion à travers ladite ouverture, pour assurer l'expansion dudit élément expansible et se solidariser avec ce dernier afin de retenir l'élément expansible dans sa configuration expansée et de ce fait pour se solidariser avec la face inférieure du chemin de câbles pour retenir la base en place, la broche de verrouillage étant en outre façonnée et configurée de sorte que, lors d'une rotation par rapport à la base et à l'élément expansible, elle peut en être désolidarisée et retirée à travers ladite ouverture pour permettre à la saillie expansible d'adopter sa configuration non expansée afin de permettre la dépose de l'élément d'attache du chemin de câbles.

4. Système d'attache de câble selon la revendication 3, ledit élément expansible comprenant deux ou plusieurs sections élastiques (132) jointes au niveau de leurs extrémités qui sont distantes du côté inférieur de la base, les sections élastiques étant assujetties d'un seul tenant au côté inférieur de la base autour de ladite ouverture (130).

5. Système d'attache de câble selon la revendication 3 ou la revendication 4, la broche de verrouillage (105) comprenant une vis ou un rivet.

6. Système d'attache de câble selon l'une quelconque des revendications 3 à 5, la broche de verrouillage (105) étant solidarisée avec la base et positionnée de sorte que son extrémité avant soit dans ladite ouverture (130), ou soit adjacente à cette dernière, et dans une position rotative de telle sorte qu'elle puisse être enfoncée à travers ladite ouverture, jusqu'à une position insérée dans laquelle elle subit une expansion et s'emboîte avec ledit élément expansible (104) facultativement, cas dans lequel ladite broche de verrouillage (105) possède, au niveau de son extrémité qui est opposée à ladite extrémité avant, une tête (138) avec une encoche (139) apte à pouvoir être solidarisée par un outil d'insertion pour permettre la rotation de celle-ci autour d'un axe qui est parallèle à son sens d'insertion à travers ladite ouverture.

7. Système d'attache de câble selon l'une quelconque des revendications précédentes, la base (12, 110) ayant une forme carrée ou rectangulaire.

8. Système d'attache de câble selon l'une quelconque des revendications précédentes, les attaches de câble (16, 116) possédant des côtés dirigés vers l'intérieur (17) avec des surfaces à rochet (18, 108) pour se solidariser avec des éléments de solidarisation respectifs (25) dans le dispositif de retenue de câble (20, 102).

9. Système d'attache de câble selon l'une quelconque des revendications précédentes, les attaches faisant saillie vers le haut (116) étant munies de crochets dirigés vers l'extérieur (103) au niveau de leurs extrémités supérieures afin de s'emboîter avec les côtés opposés respectifs d'un chemin de câbles.

10. Système d'attache de câble selon l'une quelconque des revendications précédentes, les éléments d'emboîtement (25) comprenant des saillies élastiques (29, 129) chacune étant formée avec une ou plusieurs dents qui s'étendent dans l'un des passages de la paire de passages (21, 118) pour s'emboîter dans la surface dentée correspondante (18, 108) d'une attache de câble (16, 116) qui s'étend à travers ledit passage, la saillie élastique pouvant être bougée pour sortir de l'emboîtement avec ladite attache.

11. Système d'attache de câble selon l'une quelconque des revendications précédentes, l'élément de libération étant un levier et la paire de leviers étant alignés de sorte qu'ils puissent être pincés l'un vers l'autre, ce qui sépare simultanément les deux éléments d'emboîtement élastique au niveau des éléments de retenue de l'attache de câble (16).

12. Système d'attache de câble selon l'une quelconque des revendications 1 à 10, les éléments d'emboîtement élastiques (65, 165) étant raccordés l'un à l'autre par un pontage élastique (66, 114), dont la torsion exerce une traction sur les deux éléments d'emboîtement pour les sortir des attaches de câble (70, 116) facultativement, cas dans lequel le pontage élastique (114) est soutenu au niveau de sa position centrale par un montant (115) lequel raccorde le pontage au logement du dispositif de retenue tout en permettant une torsion limitée du pontage par rapport audit logement.

13. Système d'attache de câble selon l'une quelconque des revendications précédentes, les fentes dans le dispositif de retenue pour les attaches de câbles (116) possédant des côtés externes interrompus (120) afin de faciliter l'insertion des attaches de câble.

14. Système d'attache de câble selon l'une quelconque des revendications précédentes, comprenant en outre un guide-câble (122) qui dans le système assemblé se trouve entre le logement du dispositif de retenue et la base (110) de l'élément d'attache de câble (100) et possède au moins un chemin à travers celui-ci pour permettre l'insertion de fils additionnels dans le chemin sans perturber les câbles qui y sont déjà retenus.

15. Système d'attache de câble selon la revendication 14, le guide-câble étant formé d'un seul tenant sur la face inférieure du logement du dispositif de retenue facultativement, cas dans lequel le guide-câble (122) est raccordé par articulation au logement du dispositif de retenue.
